# EUROPÄISCHE PATENTSCHRIFT

(11) **EP 0 897 494 B1**
(45) Veröffentlichungstag und Bekanntmachung des Hinweises auf die Patenterteilung: **07.06.2000**
(21) Anmeldenummer: 97917927.2
(22) Anmeldetag: 29.04.1997
(51) Int. Cl.: F16H 47/04, F16H 61/46

(54) **VERFAHREN ZUR FEINREGELUNG EINES HYDROSTATISCH-MECHANISCHEN LEISTUNGSVERZWEIGUNGSGETRIEBES**
PROCESS FOR PRECISE ADJUSTMENT OF A HYDROSTATIC AND MECHANICAL TORQUE DIVISION GEARING
PROCEDE POUR LE REGLAGE FIN D'UNE TRANSMISSION A DIVISION DE PUISSANCE MECANO-HYDROSTATIQUE

(30) Priorität: 30.04.1996 AT 77796
(43) Veröffentlichungstag der Anmeldung: 24.02.1999
(73) Patentinhaber: STEYR-DAIMLER-PUCH AKTIENGESELLSCHAFT, 1010 Wien (AT)
(72) Erfinder: ULBRICH, Peter, A-4441 Behamberg (AT); FRÜHWIRTH, Gerhard, Josef, (AT); NÖTSTALLER, Josef, A-4271 St. Oswald (AT)
(86) Internationale Anmeldenummer: AT9700083
(87) Internationale Veröffentlichungsnummer: WO9741371

(56) Entgegenhaltungen:
- WO-A-91/01460
- WO-A-91/01461
- DE-A- 2 848 595
- DE-A- 19 527 754
- FR-A- 2 443 188
- GB-A- 2 057 605
- US-A- 5 406 793

## Beschreibung

Die Erfindung handelt von einem Verfahren zur Feinregelung eines hydrostatisch-mechanischen Leistungsverzweigungsgetriebes, das aus einer verstellbaren Hydrostateinheit, einem Summierungsplanetengetriebe mit zwei Eingangswellen - einer vom hydrostatischen und einer vom mechanischen Zweig - und mindestens zwei Ausgangswellen, und einem an die Ausgangswellen anschließenden Stufengetriebe besteht.

Beim Einsatz von Ackerschleppern oder Arbeitsfahrzeugen ist es für bestimmte Arbeiten - beispielsweise zum Säen oder Kehren - erwünscht, mit sehr geringer und genau eingestellter Geschwindigkeit längere Zeit fahren zu können, oder bei schwierigen Manövern - etwa beim Ankuppeln einer Arbeitsmaschine - auch in abschüssigem Terrain sehr langsame Rückungen mit gelegentlichem Stillstand vorzunehmen. Bei den bisher bekannten Leistungsverzweigungsgetrieben sind diese Betriebsarten nicht möglich.

Ein großes Problem dabei besteht vor allem darin, daß eine genaue Geschwindigkeitsregelung ein genaues Ist-Signal braucht. Ein solches steht aber bei geringen Geschwindigkeiten nicht zur Verfügung. Bei Stillstand steht überhaupt kein Signal zur Verfügung, weshalb eine Stillstandregelung unmöglich ist. Das Signal eines Induktiv-Gebers ist zu schwach und die Impulsfolge zu lang, die Amplitude eines Signales von einem Hall-Geber ist zwar ausreichend, aber die Impulsfolge ist auch wieder zu langsam. Das verursacht quälend langsames Ansprechen auf Betätigung des Fahrhebels (Geschwindigkeitswunsch) und auf Änderungen der Fahrwerte; im Extremfall kann ein Maulwurfshügel am Feld zum Abwürgen des Motors führen. Eine genaue Einstellung der Kriechgeschwindigkeit ist nicht möglich.

Getriebe, auf das sich das Verfahren bezieht, sind zum Beispiel aus der DE 195 27 754 A1 und der EP 482 039 B1 bekannt. Bei diesen ist das Summierungsplanetengetriebe fünfwellig. Eine Eingangswelle ist mechanisch direkt angetrieben, die zweite über den Hydrostaten; von den drei Ausgangswellen führt in jeder Schaltstufe eine das Antriebsmoment in das nachgeordnete Stufengetriebe. Je nachdem, welche Schaltstufe dort geschaltet ist, ist auch im Summierungsplanetengetriebe der Kraftfluß verschieden und daher ebenfalls das Übersetzungsverhältnis bezüglich des Kraftflußes. In der EP 482 039 B1 ist sogar zu lesen, daß, wenn eine Koppelwelle auf Drehzahl null gestellt sein sollte, das aus meß- und regeltechnischen Gründen nicht gewährleistet ist und daß sich das Kraftfahrzeug unerwünscht bewegen kann.

Es ist daher Ziel der Erfindung, ein Verfahren anzugeben, nach dem sehr geringe Geschwindigkeiten bis herab zum völligen Stillstand genau und schnell eingeregelt werden können.

Erfindungsgemäß wird das dadurch erreicht, daß an den beiden Eingangswellen des Summierungsplanetengetriebes oder an damit verbundenen Teilen gebildete impulsförmige Drehzahlsignale miteinander verglichen werden, und die so gebildete Ist-Impulszahldifferenz mit einer einer Soll-Geschwindigkeit entsprechenden Soll-Impulszahldifferenz in einem Regler verglichen wird, dessen Ausgangssignal ein Verstellen des Hydrostaten bewirkt.

Dabei wird von einer Besonderheit derartiger Summierungsplanetengetriebe Gebrauch gemacht. Bei Stillstand oder sehr geringer Geschwindigkeit drehen sich die beiden Eingangswellen mit für gute Meßbarkeit ausreichenden Drehzahlen, meist im entgegengesetzten Sinn. Es können sogar noch bei völligem Stillstand starke und ausreichend schnell aufeinanderfolgende Impulse abgenommen werden. Werden die Impulse nicht an den Wellen selbst oder an Impulsringen gleicher Teilung abgenommen, sondern etwa an vorgelagerten Zahnrädern, so ist das zu berücksichtigen.

Das ermöglicht auch bei geringsten Geschwindigkeiten eine auf den Fahrerwunsch und auf Änderungen des Fahrwiderstandes rasch ansprechende und genaue Steuerung, bis herab zum völligen Stillstand, auch in abschüssigem Gelände. Somit wird dank der vorliegenden Erfindung auch eine Stillstandsregelung geschaffen, was bisher nicht möglich war.

In Weiterbildung der Erfindung wird mindestens eines der impulsförmigen Drehzahlsignale unter Berücksichtigung des im Summierungsplanetengetriebe wirkenden Übersetzungverhältnis umgeformt und die Signale werden erst dann miteinander verglichen (Anspruch 2). Dadurch wird der Vergleich der impulsförmigen Drehzahlsignale wesentlich einfacher und schneller. Dem kommt zugute, daß die Feinregelung normalerweise nur in einer - der langsamsten - Schaltstufe benötigt wird.

Das hat auch den Vorteil, daß die so umgeformten impulsförmigen Drehzahlsignale bei Stillstand gleich sind, deren Impulszahlen also gleich sind, sodaß für diesen Betriebszustand als Soll-Impulszahldifferenz Null vorgegeben werden ) kann (Anspruch 3). Auf diese Weise kann eine genaue Stillstandsregelung, unbeeinträchtigt von variablen auf das Fahrzeug wirkenden Haltekräften auf regelungstechnisch besonders einfache Weise vorgenommen werden.

5 In einer bevorzugten Ausführungsform erfolgt die Umformung des mindestestens einen der impulsförmigen Drehzahlsignale unter Berücksichtigung des im Summierungsplanetengetriebe wirkenden Übersetzungverhältnis mittels Impulszahl-Multiplikatoren (Anspruch 4). Diese sind sowohl als Hardware als auch als Software bewährte Elemente, die sehr schnell arbeiten bzw ablaufen, und billig zur Verfügung stehen. Man muß ihnen nur das zu berücksichtigende Übersetzungsverhältnis eingeben. Dabei kann man auch gleich mitberücksichtigen, wo die Impulse abgenommen werden.

Eine besseres Zeitverhalten, insbesondere schnelleres Ansprechen, und genaueres Einhalten der Soll-Fahrgeschwindigkeit und des Stillstandes ist durch Einsatz eines kaskadierbaren Impulszahl-Multiplikators zu erreichen (Anspruch 5). Dieser Vorteil fällt dann besonders ins Gewicht, wenn das zu berücksichtigende Übersetzungsverhältnis eine vielstellige Dezimalzahl ist, sodaß normalerweise für den Vergleich sehr viele Impulse zu zählen sind, was die Steuerung bei solchen Übersetzungsverhältnissen bis zur Unmöglichkeit verzögern würde. Die Umformung in aufeinanderfolgenden Schritten bedeutet, daß zuerst nur ein den ersten beiden Stellen des Übersetzungsverhältnis ähnliches Verhältnis eingeregelt wird und dann in einem weiteren Zähldurchgang die nächste Stelle mitberücksichtigt wird, und so weiter. Da diese Rechnung mit modernen Steuerungsprozessoren jedenfalls schneller geht, als der den Hydrostaten verstellende Regler folgen kann, bedeutet das maximale Stellgeschwindigkeit und höchste Genauigkeit beim Einstellen der Sollgeschwindigkeit.

Weiters liegt es im Rahmen der Erfindung, die Feinregelung mittels einer Wahleinrichtung einzuschalten, und das vom Fahrhebel (Fahrpedal) gelieferte Signal nach einer anderen Funktion zur Steuereinheit zu übertragen (Anspruch 6). Mit anderen Worten wird der dem kleinen Geschwindigkeitsbereich zugeordnete Fahrpedalweg auseinandergezogen, sodaß auch von der ergonomischen Seite eine genaue Einstellung möglich ist.

Im folgenden wird das erfindungsgemäße Verfahren anhand von Abbildungen erläutert. Es stellen dar:
- Fig.1:: Ein zur Ausübung-des erfindungsgemäßen Verfahrens geeignetes hydrostatisch-mechanisches Leistungsverzweigungsgetriebe,
- Fig.2:: Ein Funktionsschema des erfindungsgemäßen Verfahrens.

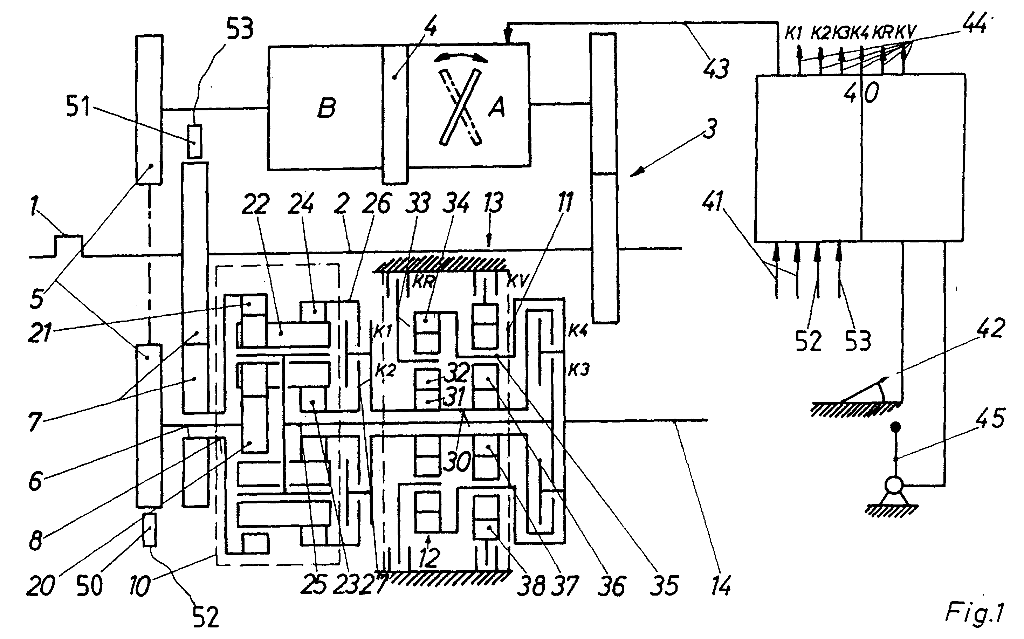

In Fig.1 ist der Motor 1, etwa eine Verbrennungskraftmaschine, nur angedeutet. Er treibt ohne dazwischen liegende Kupplung eine Getriebeeingangswelle 2. Diese treibt einerseits über eine erste Zahnradtransmission 3 eine steuerbare Hydrostateinheit 4, deren Ausgang über eine zweite Zahnradtransmission 5 eine erste Eingangswelle 6 antreibt. Andererseits treibt die Getriebeeingangswelle 2 über eine dritte Zahnradtransmission 7 eine zweite Eingangswelle 8. Die Hydrostateinheit 4 besteht aus zwei hydrostatischen Maschinen A,B, wovon immer eine als Motor und eine als Pumpe arbeitet. Die Maschine A ist stufenlos in beiden Drehrichtungen steuerbar.

Die beiden Eingangswellen 6,8 sind Teil eines Summierungsplanetengetriebes 10, von dem aus über Kupplungen K1,K2 ein Stufengetriebe 11 angetrieben wird, welches hier aus einer ersten Planetengetriebestufe 12 mit einer Kupplung KR (genauer: einer Bremse) und einer zweiten Planetengetriebestufe 13 mit einer Kupplung (genauer: einer Bremse) KV besteht. Über Kupplungen K3,K4 wird eine Abtriebswelle 14 geschaltet, die beispielsweise dem Antrieb eines Fahrzeuges dient.

Das Summierungsplanetengetriebe 10 enthält eine erste Sonne 20, ein erstes Hohlrad 21 und abgestufte Planeten 22, die den ersten Planetensatz bilden. Der zweite Planetensatz besteht aus einer zweiten Sonne 23, einem Hohlrad 24 und den abgestuften Planeten 22, die beiden Sätzen gemeinsam sind. Die Planeten 22 sind auf einem Planetenträger gelagert, dessen Welle 25 die erste Ausgangswelle des Summierungsplanetengetriebes 10 darstellt. Das zweite Hohlrad 24 wirkt über eine Hohlradwelle 26 auf die Kupplung K1 und stellt die zweite Ausgangswelle dar. Die zweite Sonne 23 wirkt über eine Sonnenwelle 27 auf die Kupplung K2 und stellt die dritte Ausgangswelle des Summierungsplanetengetriebes 10 dar.

Die erste Stufe 12 des Stufengetriebes 11 besteht aus einem ersten Sonnenrad 31, ersten Planetenrädern 32, einem ersten Planetenträger 33 und einem ersten Ringrad 34. Die Sonnenradwelle 30 wird wahlweise über eine der beiden Kupplungen K1,K2 angetrieben, der erste Planetenträger 33 ist mittels der Kupplung KR am stationären Gehäuse festbremsbar. Das erste Ringrad 34 ist mit einem zweiten Planetenträger 35 der zweiten Planetengetriebestufe 13 drehfest verbunden. Dessen Planetenräder 36 kämmen innen mit einem zweiten Sonnenrad 37, das mit der Sonnenradwelle 30 drehfest verbunden ist und außen mit einem zweiten Ringrad 38, welches über die Kupplung KV am Gehäuse festbremsbar ist. Die Abtriebswelle 14 ist mit dem zweiten Planetenträger 35 drehfest verbunden und über die Kupplungen K3,K4 entweder mit der Planetenträgerwelle 25 oder mit der Sonnenradwelle 30 drehfest verbindbar.

Weiters ist ein Steuergerät 40 angedeutet. Dieses erhält über Signalleitungen 41 gemessene Betriebs- und Fahrparameter sowie von einem Fahrpedal 42 eine Last- bzw Geschwindigkeitsvorgabe. Aus diesen Signalen bildet das Steuergerät 40 Steuersignale für den Hydrostaten 4, die diesem über die Steuerleitung 43 übermittelt werden und Steuersignale 44 für die Kupplungen K1,K2, K3,K4,KR,KV. Schließlich ist noch ein Wählschalter 45 vorgesehen, den der Fahrer betätigt, um zwischen Vorwärts- und Rückwärtsfahrt und zwischen Normalregelung und Feinregelung zu wählen.

Für Steuerungszwecke sind im Getriebe diverse Sensoren angebracht; so auch ein erster Sensor 50 für die Drehzahl der ersten Eingangswelle 6 und ein zweiter Sensor 51 für die Drehzahl der zweiten Eingangswelle 8. Der Sensor 50 tastet dazu ein Zahnrad der zweiten Zahnradtransmission 5 und der Sensor 51 ein Zahnrad der dritten Zahnradtransmission 7 ab. An welchem der beiden Zahnräder ist egal, da die Zähnezahl beim späteren Vergleich der Impulszahlen berücksichtigt werden kann. Diese Sensoren sind über Leitungen 52,53 mit dem Steuergerät 40 verbunden.

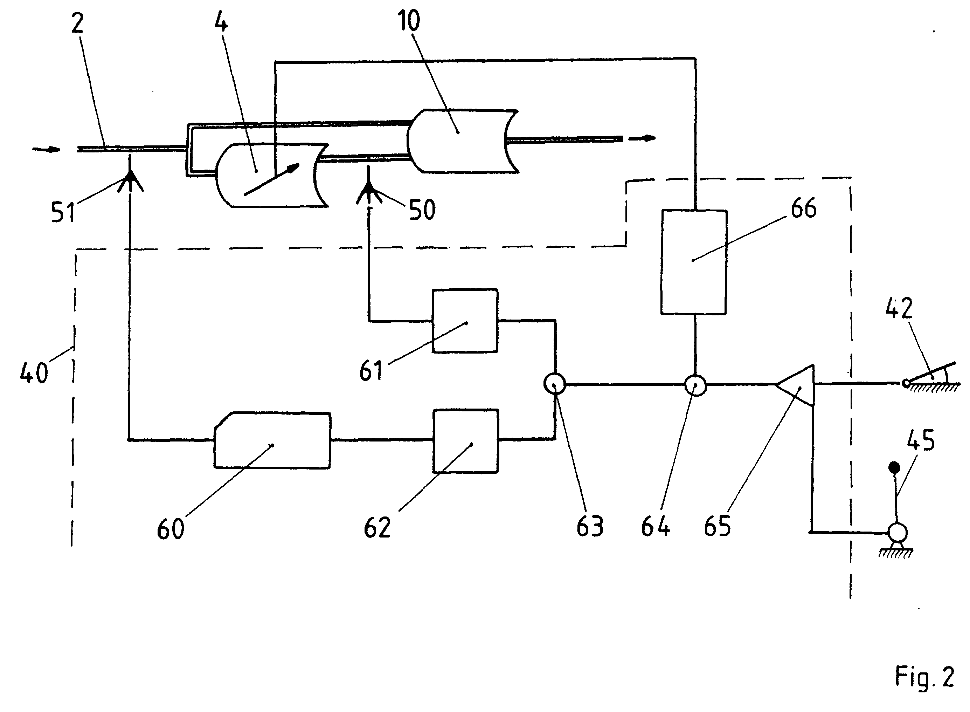

In Fig.2 ist der weitere Weg dieser Sensorsignale zu verfolgen. Da beim Vergleich der Impulszahlen das im Summierungsplanetengetriebe wirkende Übersetzungsverhältnis zu berücksichtigen ist, ist zuerst ein Signalumformer 60 vorgesehen; darauf folgen erst Impulszähler 61,62. Der Signalumformer 60 kann entweder zwischen Sensor 50 und Zähler 61 oder zwischen Sensor 51 und Zähler 62, oder zwischen beiden, angeordnet sein. Im vorliegenden Beispiel ist letzteres der Fall.

Der Signalumformer 60 ist ein Impulszahl-Multiplikator, auch "Bit-rate-multiplier" genannt, und zum Beispiel unter der Bezeichnung CD4527 im Fachhandel. Mit seiner Hilfe wird das Übersetzungsverhältnis in der Weise berücksichtigt, daß die Zähler 61,62 bei Stillstand in gleicher Zeit gleich viele Impulse abzählen. Er ist kaskadierbar, sodaß die Umformung in aufeinanderfolgenden Schritten erfolgt, wie noch zu erläutern.

Die Zählresultate werden dann in einem Addierglied 63, mit entsprechenden Vorzeichen, miteinander verglichen. Für Stillstand müssen sie in einer bevorzugten Ausführungsform gleich sein. In einem weiteren Addierglied 64 wird diese Ist-Impulszahldifferenz mit einer Soll-Impulszahldifferenz verglichen und eine Regelgröße für einen Regler 66 gebildet. Die Soll-Impulszahldifferenz, entsprechend einer Soll-Fahrgeschwindigkeit des Fahrzeuges, wird vom Fahrer mittels des Fahrpedales 42 vorgegeben, so wie beim Betrieb mit normaler Steuerung. Die Feinsteuerung jedoch wird mittels des Hebels 45 gewählt. Das bewirkt nebst den normalen Steuerungseingriffen, daß das vom Fahrhebel 42 gelieferte Signal über einen Umsetzer 65 nach einer anderen Funktion zur Steuereinheit 40 übertragen wird. Die andere Funktion besteht darin, daß der dem kleinen Geschwindigkeitsbereich zugeordnete Sollwert über den gesamten Fahrpedalweg auseinandergezogen wird, also in einer Spreizung. Dadurch entspricht dem gesamten Fahrpedalweg ein Geschwindigkeitsbereich von Stillstand bis etwa 3 km/h.

Die Umformung in aufeinanderfolgenden Schritten erfolgt so: Aus den Zähnezahlen der abgetasteten Zahnräder und dem im Summierungsplanetengetriebe vorgegebenen Übersetzungsverhältnis ergibt sich beispielsweise ein zu berücksichtigendes Verhältnis von 1:1,023. Um dieses zu erreichen, müßten in derselben Zeit einerseits 1000 und andererseits 1023 Impulse abgegeben werden. Durch die Kaskadierung werden in einem ersten Durchgang nur 50 Impulse mit 51 verglichen, was einem Übersetzungsverhältnis von 1:1.02 entspricht, und dann in einem zweiten Durchgang 333 mit 334 Impulsen verglichen, was dem Restfehler von 1:0,003 entspricht, und so weiter wenn erforderlich. Da bereits nach dem ersten Durchgang - also nach sehr kurzer Zeit - ein Vergleichsergebnis und damit eine Regelgröße vorliegt, kann der Regler bereits nach dem ersten Durchgang ansprechen. Bis er angesprochen und reagiert hat, sind meist auch die Resultate der weiteren Durchgänge da. Ansonsten braucht er nach den weiteren Durchgängen nur mehr zu korrigieren. Das Ausgangssignal des Reglers 66, die Stellgröße, wirkt dann in geeigneter Weise auf den Hydrostaten 4.

## Patentansprüche

1. Verfahren zur Feinregelung eines hydrostatisch-mechanischen Leistungsverzweigungsgetriebes, das aus einer verstellbaren Hydrostateinheit (4), einem Summierungsplanetengetriebe (10) mit zwei Eingangswellen (6,8), einer vom hydrostatischen und einer vom mechanischen Zweig, und mindestens zwei Ausgangswellen, und einem an die Ausgangswellen anschließenden Stufengetriebe (11) besteht, dadurch **gekennzeichnet**, daß an den beiden Eingangswellen (6,8) des Summierungsplanetengetriebes (10) oder an damit verbundenen Teilen von Sensoren (50,51) gebildete impulsförmige Drehzahlsignale miteinander verglichen werden, und die so gebildete Ist-Impulszahldifferenz mit einer einer Soll-Geschwindigkeit entsprechenden Soll-Impulszahldifferenz verglichen wird und das Ausgangssignal eines auf das Resultat dieses Vergleiches ansprechenden Reglers (66) ein Verstellen des Hydrostaten (4) bewirkt.

2. Verfahren nach Anspruch 1, dadurch **gekennzeichnet**, daß mindestestens eines der impulsförmigen Drehzahlsignale unter Berücksichtigung des im Summierungsplanetengetriebe (10) wirkenden Übersetzungverhältnis in einem Signalumformer (60) umgeformt wird und die Signale erst dann miteinander verglichen werden.

3. Verfahren nach Anspruch 2, dadurch **gekennzeichnet**, daß für Stillstandsregelung-die mit der Ist-Impulszahldifferenz verglichene Soll-Impulszahldifferenz gleich Null gesetzt wird.

4. Verfahren nach Anspruch 2, dadurch **gekennzeichnet**, daß der Signalumformer (60) für das mindestestens eine der impulsförmigen Drehzahlsignale unter Berücksichtigung des im Summierungsplanetengetriebe wirkenden Übersetzungverhältnis ein Impulszahl-Multiplikator ist.

5. Verfahren nach Anspruch 4, dadurch **gekennzeichnet**, daß der Impulszahl-Multiplikator (60) kaskadierbar ist, sodaß die Umformung in aufeinanderfolgenden Schritten erfolgt.

6. Verfahren nach Anspruch 1, dadurch **gekennzeichnet**, daß die Feinregelung mittels einer Wahleinrichtung (45) eingeschaltet wird, und daß das vom Fahrhebel (Fahrpedal) gelieferte Signal über einen Umsetzer 65 nach einer anderen Funktion zur Steuereinheit (40) übertragen wird.

## Claims

1. A method for the fine control of a hydrostatic/mechanical multiple path power transmission, which comprises an adjustable hydrostat unit (4), a summing planetary gearbox (10) with two input shafts (6,8), one from the hydrostatic and one from the mechanical path, and at least two output shafts, and a step gearbox (11) connected to the output shafts, **caracterized** in that pulse-like rotational speed signals formed by sensors (50,51) on the two input shafts (6,8) of the summing planetary gearbox (10) or on parts connected thereto are compared with each other, and the actual pulse count difference formed in this way is compared with a desired pulse count difference corresponding to a desired speed, and an output signal of a controller (66) that responds to the result of this comparison effects adjustment of the hydrostat (4).

2. The method as claimed in claim 1, **caracterized** in that at least one of the pulse-like rotational speed signals is converted in a signal converter (60), taking account of the transmission ratio acting in the summing planetary gearbox (10), and only then are the signals compared with each other.

3. The method as claimed in claim 2, **caracterized** in that for standstill control the desired pulse count difference that is compared with the actual pulse count difference is set equal to zero.

4. The method as claimed in claim 2, **caracterized** in that the signal converter (60) for the at least one of the pulse-like rotational speed signals, taking account of the transmission ratio acting in the summing planetary gearbox, is a pulsecount multiplier.

5. The method as claimed in claim 4, **caracterized** in that the pulsecount multiplier (60) can be cascaded, so that the conversion is carried out in successive steps.

6. The method as claimed in claim 1, **caracterized** in that the fine control is engaged by means of a selector device (45), and wherein the signal supplied by the throttle lever (gas pedal) is transmitted to the control unit (40) in accordance with a different function via a converter (65).

## Revendications

1. Procédé pour le réglage fin d'une transmission à division de puissance mécano-hydrostatique qui est constituée d'une unité hydrostatique réglable (4), d'un train planétaire composite (10) comportant deux arbres d'entrée (6, 8), dont l'un provient de l'unité hydrostatique et dont l'autre provient de l'unité mécanique, et au moins deux arbres de sortie, et d'un train réducteur (11) se raccordant aux arbres de sortie, caractérisé en ce que l'on compare des signaux impulsionnels relatifs à la vitesse de rotation générés par des capteurs (50, 51) au niveau des deux arbres d'entrée (6, 8) du train planétaire composite (10) ou de pièces raccordées à ceux-ci, et l'on compare la différence de débit binaire réel ainsi obtenue avec une différence de débit binaire théorique correspondant à une vitesse théorique dans un dispositif de réglage (66) dont le signal de sortie sensible au résultat de cette comparaison effectue le réglage de l'unité hydrostatique (4).

2. Procédé selon la revendication 1, caractérisé en ce qu'au moins un des signaux impulsionnels relatifs à la vitesse de rotation est converti en tenant compte du rapport de changement de vitesse dans le train planétaire composite (10), après quoi les signaux sont comparés entre eux.

3. Procédé selon la revendication 2, caractérisé en ce que, pour le réglage à l'arrêt, la différence de débit binaire théorique comparée avec la différence de débit binaire réel est fixée à zéro.

4. Procédé selon la revendication 2, caractérisé en ce que le convertisseur de signal (60) d'au moins un signal impulsionnel relatif à la vitesse de rotation en tenant compte du rapport de changement de vitesse dans le train planétaire composite est un multiplicateur de débit binaire.

5. Procédé selon la revendication 4, caractérisé en ce que des multiplicateurs de débit binaire (60) peuvent être agencés en cascade de telle sorte que la conversion se fasse par étapes successives.

6. Procédé selon la revendication 1, caractérisé en ce que le réglage fin est effectué au moyen d'un dispositif de sélection (45), et que le signal délivré par le levier de vitesse (pédale d'accélération) est transféré par un convertisseur (65) après une autre fonction à l'unité de commande (40).
